# DEMANDE DE BREVET EUROPEEN

(11) **EP 0 824 214 A1**
(43) Date de publication de la demande: **18.02.1998**
(21) Numéro de dépôt: 97401887.1
(22) Date de dépôt: 13.08.1997
(51) Int. Cl.: G01N 33/483, G01N 1/31

(54) **Procédé et dispositif pour le traitement d'échantillons**

(30) Priorité: 13.08.1996 FR 9610161
(71) Demandeur: L'OREAL, 75008 Paris (FR)
(72) Inventeur: Esclar, Dominique, 08360 Herpy l'Arlesienne (FR); Carmona, Piere-Luis, 93220 Gagny (FR); Leitman, Franck, 93250 Tremblay en France (FR); Braque, Gérard, 77290 Mitry le Neuf (FR); Sterle, Pascal, 95230 Soisy Sous Montmorency (FR)
(74) Mandataire: Leszczynski, André

(57) **Abrégé**

L'invention est relative à un dispositif (1) pour la mise en oeuvre de traitements successifs d'échantillons, tels que des échantillons de fibres, notamment des cheveux, dont le traitement par au moins un liquide et le séchage des échantillons.

Il comporte une pluralité de godets (6) aptes à recevoir chacun un échantillon E, des moyens d'amenée d'au moins un liquide de traitement dans chaque godet, et des moyens pour créer dans chaque godet un courant gazeux de séchage.

## Description

La présente invention concerne le traitement d'échantillons, tels que des échantillons de fibres, notamment des cheveux.

L'invention concerne plus particulièrement le traitement d'échantillons par au moins un liquide, suivi d'un séchage.

On connaît un dispositif pour le traitement simultané d'échantillons par un liquide, comportant une pluralité de paniers porte-échantillons entraînés selon un déplacement hélicoïdal d'axe vertical dans des cuves respectives remplies dudit liquide et maintenues à la température de traitement souhaitée par un bain-marie.

A la fin du traitement par ledit liquide, les paniers porte-échantillons sont retirés des cuves et placés dans une étuve pour le séchage des échantillons.

Un tel dispositif n'offre pas entière satisfaction, notamment parce qu'il oblige à de nombreuses manipulations par du personnel de laboratoire, ce qui limite le nombre d'expérimentations pouvant être effectuées pendant une durée donnée.

Par ailleurs, lorsque l'on cherche à déterminer l'effet d'un produit de traitement capillaire sur les cheveux, il importe que les essais soient effectués sur les échantillons de manière à être représentatifs de l'action réelle du produit sur la chevelure, qui dépend notamment des conditions d'application du produit sur celle-ci et des diverses actions précédant ou succédant à l'application du produit, telles que des shampooings et séchages par exemple.

La présente invention vise à accroître les possibilités d'expérimentations pouvant être menées pendant une période donnée tout en permettant d'obtenir des résultats expérimentaux reproductibles et très représentatifs d'un traitement effectué in vivo.

Elle y parvient en proposant un dispositif pour la mise en oeuvre de traitements successifs d'échantillons, tels que des échantillons de fibres, notamment des cheveux, dont le traitement par au moins un liquide et le séchage des échantillons, caractérisé par le fait qu'il comporte une pluralité de godets aptes à recevoir chacun un échantillon, des moyens d'amenée d'au moins un liquide de traitement dans chaque godet, et des moyens pour créer dans chaque godet un courant gazeux de séchage.

Ainsi, grâce à l'invention, le traitement de chaque échantillon par un liquide et son séchage peuvent s'effectuer dans la même enceinte, de sorte qu'il n'est plus nécessaire d'extraire les échantillons des godets où ils ont été traités par le liquide pour les amener dans une étuve externe. On diminue ainsi le nombre de manipulations des échantillons par le personnel de laboratoire; en outre, le traitement des échantillons devient relativement facile à automatiser.

Selon une caractéristique avantageuse de l'invention, le dispositif comporte en outre une pluralité de pistons associés respectivement auxdits godets et des moyens d'entraînement pour déplacer lesdits pistons à l'intérieur desdits godets.

Il est ainsi possible de soumettre les échantillons à une action de malaxage proche de celle qui est effectuée dans la réalité lors de l'application d'une teinture ou d'un shampooing sur les cheveux.

Les inventeurs ont constaté, lorsque le dispositif servait à déterminer la ténacité d'une teinture capillaire, que les essais effectués avec le dispositif selon l'invention étaient beaucoup plus représentatifs de l'action réelle du liquide testé sur la chevelure que les essais menés avec le dispositif à paniers porte-échantillons de l'art antérieur, mentionné précédemment.

Dans une réalisation préférée de l'invention, le dispositif comporte des moyens de commande desdits moyens d'entraînement, agencés pour contrôler le déplacement desdits pistons à l'intérieur desdits godets.

Selon un premier mode de fonctionnement, lesdits pistons sont commandés pour se déplacer selon un mouvement alternatif sur une course prédéterminée de manière à provoquer une action de malaxage des échantillons.

Selon un deuxième mode de fonctionnement, les pistons sont commandés pour se déplacer vers le bas sur une course supérieure, de manière à provoquer une action d'essorage des échantillons.

Dans un mode de réalisation particulier de l'invention, chaque piston est traversé par au moins un canal d'amenée d'un liquide de traitement dans le godet correspondant. De préférence, chaque piston est équipé d'un clapet propre à empêcher la remontée du liquide de traitement dans ce canal d'amenée lorsque le piston s'enfonce dans le godet.

Dans un mode de réalisation particulier de l'invention, le fond de chaque godet est percé d'orifices et le dispositif comporte des moyens pour envoyer un courant gazeux de séchage dans chaque godet au travers desdits orifices.

Dans un mode de réalisation particulier de l'invention, le dispositif comporte des moyens pour faire communiquer sélectivement lesdits orifices, soit avec une canalisation d'évacuation, soit avec une soufflante.

Dans un mode de réalisation particulier de l'invention, lesdits moyens d'amenée d'au moins un liquide de traitement dans chaque godet comportent :
- un corps de distributeur présentant un logement dans lequel débouche au moins une entrée d'amenée dudit liquide,
- une succession de chambres d'accumulation de liquide, communiquant par des orifices d'entrée et de sortie respectifs avec ledit logement et par des sorties de distribution de liquide respectives avec l'extérieur, lesdites sorties étant munies chacune de moyens d'obturation, pouvant être ouverts pour la distribution du liquide,
- des canaux d'amenée d'un gaz de chasse associés auxdites chambres,
- un organe de sélection mobile dans ledit logement entre une position de remplissage et une position de distribution,
- des moyens d'étanchéité placés dans ledit logement entre le corps du distributeur et ledit organe de distribution, ces derniers étant conformés et lesdits moyens d'étanchéité étant positionnés de manière à, lorsque ledit organe de sélection est dans la position de remplissage, définir des passages de liquide dans ledit logement entre un orifice de sortie d'une chambre et un orifice d'entrée de la chambre suivante, pour forcer la circulation du liquide depuis ladite entrée d'amenée dudit liquide successivement à travers les différentes chambres, et lorsque l'organe de sélection est dans la position de distribution, fermer lesdits passages pour permettre, lorsque les moyens d'obturation associés à chaque chambre sont ouverts, l'écoulement du liquide contenu à l'intérieur de chaque chambre par la sortie de distribution de liquide correspondante sous l'action dudit gaz de chasse.

Le nombre de chambres d'accumulation permettant de distribuer autant de doses d'un liquide de traitement peut être relativement élevé, par exemple égal à seize, sans que le coût global du dispositif s'en trouve augmenté notablement, du fait que l'on évite dans ce mode particulier de réalisation l'utilisation d'un grand nombre d'électrovannes respectivement associées auxdites chambres d'accumulation.

De préférence, le gaz de chasse précité est de l'air comprimé.

Dans un mode de réalisation particulier de l'invention, lesdits canaux d'amenée du gaz de chasse débouchent dans ledit logement et sont isolés par lesdits moyens d'étanchéité lorsque l'organe de sélection est dans la position de remplissage.

Dans un mode de réalisation particulier de l'invention, lesdits moyens d'étanchéité sont portés par l'organe de sélection et ce dernier présente une forme allongée et peut coulisser à l'intérieur dudit logement.

De préférence, chaque orifice d'amenée du gaz de chasse est situé le long de la trajectoire de l'organe de sélection entre les orifices d'entrée et de sortie d'une chambre d'accumulation débouchant dans ledit logement.

Dans un mode de réalisation particulier de l'invention, lesdits moyens d'obturation sont constitués par des clapets s'ouvrant lorsque la pression du liquide dans la chambre d'accumulation associée dépasse une valeur prédéterminée.

Dans un mode de réalisation particulier de l'invention, le volume de chaque chambre d'accumulation est réglable, par exemple par déplacement d'une pièce portant le clapet correspondant.

L'invention a encore pour objet un procédé pour appliquer des traitements successifs à des échantillons de fibres, notamment des cheveux, dont le traitement par au moins un liquide et un séchage desdits échantillons, caractérisé par le fait que pour chaque échantillon, le traitement par ledit liquide et le séchage s'effectuent dans un même godet à l'intérieur duquel est placé l'échantillon.

Dans une mise en oeuvre particulière dudit procédé, ce dernier comporte une étape consistant à essorer chaque échantillon au moyen d'un piston descendu dans chaque godet et venant presser l'échantillon contre le fond du godet.

Selon une mise en oeuvre particulière du procédé selon l'invention, ce dernier comporte en outre l'étape consistant à envoyer un jet d'un gaz comprimé par un canal traversant ledit piston.

Selon une mise en oeuvre particulière du procédé selon l'invention, ce dernier comporte également les étapes consistant à :
- relier en série par des passages formés entre un corps de distributeur et un organe de sélection dans une position relative donnée par rapport au corps du distributeur une succession de chambres d'accumulation de liquide, le volume de chaque chambre correspondant à une dose prédéterminée de produit à distribuer dans un godet, ou groupe de godets,
- remplir lesdites chambres par circulation de liquide entre la première et la dernière chambre, le passage d'une chambre à la suivante s'effectuant par trop-plein,
- isoler les chambres entre elles en déplaçant l'organe de sélection relativement au corps de distributeur pour fermer lesdits passages,
- envoyer dans chaque chambre un gaz de chasse pour permettre le départ du liquide contenu à l'intérieur par une sortie de distribution de liquide et le remplissage du godet ou groupe de godets correspondant.

D'autres caractéristiques et avantages de la présente invention ressortiront à la lecture de la description détaillée qui va suivre, d'un exemple de réalisation non limitatif de l'invention, et à l'examen du dessin annexé sur lequel :
- la figure 1 est une vue schématique, en élévation frontale, d'un dispositif selon un mode particulier de réalisation de l'invention, - la figure 2 est une vue en perspective, schématique, représentant un godet servant à contenir un échantillon,
- la figure 3 est une coupe axiale du godet représenté sur la figure 2,
- la figure 4 est une vue de dessus du fond du godet,
- la figure 5 est une vue en coupe axiale, schématique, représentant un piston avant sa descente dans un godet correspondant,
- les figures 6 à 15 illustrent différentes étapes du traitement d'un échantillon,
- la figure 16 est une vue schématique en coupe d'un dispositif servant à distribuer des doses prédéterminées d'un liquide de traitement dans les godets,
- les figures 17 à 19 représentent le dispositif de la figure 16 au cours de différentes étapes de son fonctionnement, et
- la figure 20 montre une variante de réalisation du dispositif représenté sur les figures 16 à 19.

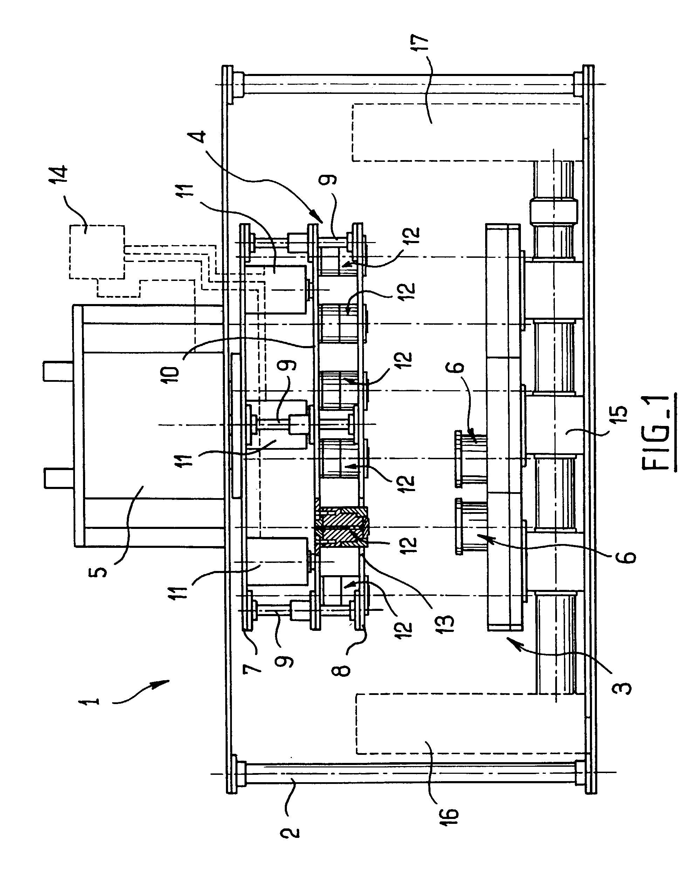

On a représenté sur la figure 1 un dispositif 1 conforme à un exemple particulier de réalisation de l'invention.

Ce dispositif 1 comporte un bâti 2 servant de support à une platine porte-échantillons 3 et un ensemble 4 suspendu au-dessus de la platine 3 et pouvant coulisser sur des montants verticaux solidaires du bâti 2, sous l'action d'un vérin 5.

La platine 3 présente une pluralité de logements pour recevoir chacun un godet 6 dans lequel est placé un échantillon que l'on désire tester. Dans l'exemple décrit, chaque godet 6 est indépendant, mais on ne sort pas du cadre de l'invention en rendant solidaire plusieurs godets, voire en réalisant d'un seul tenant plusieurs cuves individuelles de traitement par la conformation adéquate d'une feuille de matière plastique par exemple.

L'ensemble 4 comporte deux plaques horizontales supérieure et inférieure 7, 8 se faisant face et reliées par des entretoises verticales 9. Un plateau 10 est monté à coulissement sur les entretoises 9 entre les plaques 7 et 8 et se déplace sous l'action de vérins 11 dont le corps est fixé à la plaque supérieure 7.

Une pluralité de pistons 12, dont le rôle sera précisé dans la suite, sont fixés au plateau 10 et s'étendent verticalement vers le bas. Des orifices 13 sont ménagés au travers de la plaque inférieure 8 pour le passage des pistons 12 lorsque le plateau 10 est descendu sous l'action des vérins 11.

Des moyens de commande 14, représentés schématiquement sur la figure 1, sont prévus pour contrôler le mouvement des vérins 5 et 11 de la manière qui sera décrite dans la suite.

Chaque godet 6 est raccordé inférieurement à une canalisation 15 qui sert à la fois de canalisation d'évacuation et de canalisation d'amenée d'air de séchage. Cette canalisation 15 peut ainsi être reliée soit à des moyens d'évacuation 16 soit à une soufflante 17, connus en eux-mêmes et représentés très schématiquement.

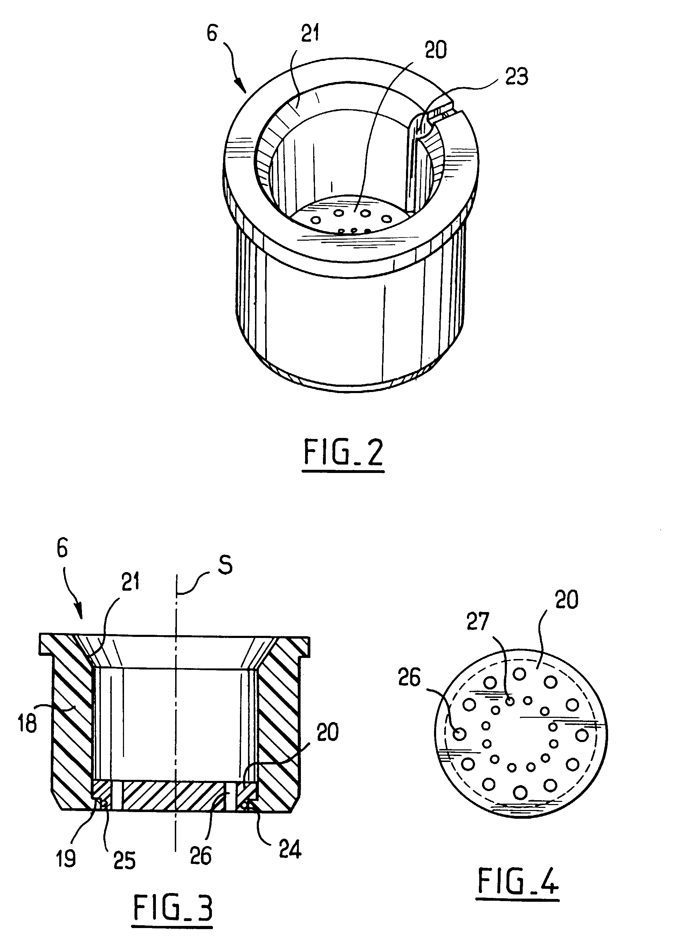

On a représenté isolément sur les figures 2 et 3 un godet 6.

Celui-ci comporte un corps 18 généralement symétrique de révolution autour d'un axe de symétrie S. Le corps 18 est épaulé à sa partie inférieure 19 pour servir de siège à une pièce épaulée 20 constituant le fond du godet 6. La surface interne du corps 18 est cylindrique de révolution sur la majeure partie de sa hauteur et s'évase à son extrémité supérieure pour faciliter l'introduction lors du montage de la pièce 20, par le dessus, dans le corps 18.

De préférence, comme représenté sur la figure 2, le corps 18 est rainuré intérieurement sur une partie de sa hauteur à partir de son extrémité supérieure pour former un logement 23 destiné, lorsque l'échantillon est une mèche de cheveux autour de laquelle est serré un collier, à recevoir ce collier afin d'améliorer le maintien de cette mèche de cheveux à l'intérieur du godet 6, et notamment l'empêcher de tourner autour de l'axe S.

Comme on pourra le constater à l'examen de la figure 3, la pièce 20 présente à sa partie inférieure, s'ajustant dans l'ouverture inférieure 24 du corps 18, une gorge annulaire permettant de loger un joint torique 25 assurant le maintien par friction de la pièce 20 dans le corps 18 ainsi que l'étanchéité entre la pièce 20 et le corps 18.

La pièce 20 est par ailleurs traversée sur toute son épaisseur par une série de canaux parallèles à l'axe S, de section circulaire et disposés selon deux cercles concentriques autour de celui-ci, comme représenté sur la figure 4. Les canaux situés à l'extérieur, référencés 26, offrent une section de passage dont le diamètre est supérieur à celui des canaux situés à l'intérieur. Cette disposition particulière permet de distribuer le courant gazeux de séchage traversant la pièce 20 principalement le long de la surface interne du corps 18, contre laquelle tend à se plaquer l'échantillon lorsqu'il est constitué par une mèche de cheveux formant une boucle à l'intérieur du godet 6.

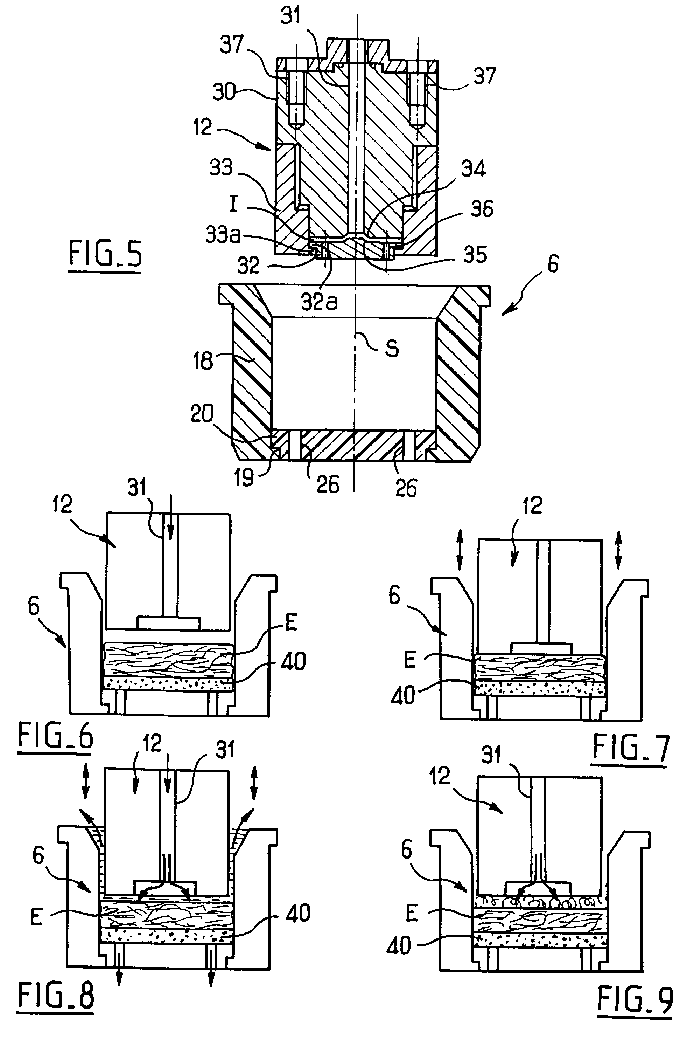

On a représenté sur la figure 5 un piston 12 maintenu au-dessus d'un godet 6 associé.

Ce piston 12 comporte un corps 30 traversé par un alésage central 31 de même axe que l'axe de symétrie S du godet 6 correspondant. Un clapet 32 est monté en partie inférieure du corps 30 au moyen d'une pièce de retenue épaulée 33 vissée sur le corps 30. L'alésage 31 débouche au-dessus du clapet 32 par une embouchure conique 34 et la face supérieure du clapet 32 présente une partie centrale tronconique 35 conformée pour s'ajuster dans l'embouchure 34 et obturer l'alésage 31 lorsque le clapet 32 est plaqué contre le corps 30. Le clapet 32 est traversé, au voisinage de sa périphérie, par une pluralité de canaux 36, parallèles à l'axe S, qui permettent à un liquide ou à un gaz introduit dans l'alésage 31 de déboucher en partie inférieure du piston 12.

En l'absence de contre-pression, le clapet 32 repose par un rebord 32a ménagé à sa périphérie sur un épaulement 33a de la pièce de retenue 33. Un intervalle I est ménagé entre les faces en regard du corps 30 et du clapet 32, permettant à un fluide liquide ou gazeux débouchant à l'extrémité inférieure de l'alésage 31 de gagner les canaux 36. Des perçages borgnes taraudés 37 sont réalisés en partie supérieure du corps 30 pour la fixation du piston 12 sur le plateau 10.

La pièce de retenue 33 présente une surface radialement externe cylindrique de révolution se situant dans le prolongement de la surface radialement externe du corps 30. Le diamètre externe du piston 12 est inférieur à celui de la surface interne du corps 18 du godet 6, de sorte qu'un jeu annulaire est ménagé entre le godet 6 et le piston 12 lorsque ce dernier est descendu à l'intérieur du godet 6.

On va maintenant décrire en référence aux figures 6 à 15 un exemple non limitatif de mise en oeuvre du dispositif qui vient d'être décrit, pour déterminer la ténacité d'une teinture capillaire.

On commence par placer dans le fond de chaque godet 6 un tampon en mousse ou éponge 40 puis un échantillon E, le piston 12 correspondant étant relevé.

On descend ensuite le piston 12 comme représenté sur la figure 6, et l'on procède au mouillage de l'échantillon E en envoyant de l'eau par l'alésage 31. Puis, le piston 12 est commandé par les moyens de commande 14 pour se déplacer selon un mouvement alternatif d'une course prédéterminée à l'intérieur du godet 6, comme représenté sur la figure 7. A chaque mouvement de descente du piston 12, le clapet 32 se ferme pour empêcher la remontée dans l'alésage 31 du piston 12 du liquide contenu dans le godet 6. Au plus bas de sa course, le piston 12 comprime légèrement l'échantillon E et le tampon 40, tandis qu'au plus haut de sa course, il ménage un intervalle avec la face supérieure de l'échantillon E, d'où il résulte une action de malaxage de l'échantillon E et une imprégnation en profondeur de ce dernier. Lorsque l'échantillon E est complètement mouillé, on réalise l'essorage de celui-ci en prolongeant vers le bas la course du piston, l'eau en excès étant chassée par les canaux 26 et 27 de la pièce 20.

Ensuite, une dose prédéterminée de teinture est injectée par l'alésage 31 et l'on déplace de nouveau le piston 12 selon un mouvement alternatif pour exercer une action de malaxage de l'échantillon E et favoriser l'action de la teinture sur les fibres. La dose de teinture envoyée dans chaque godet est de préférence obtenue au moyen d'un dispositif de distribution particulier qui sera décrit dans la suite. Au bout d'une durée prédéterminée, on essore de nouveau l'échantillon E en prolongeant vers le bas la course du piston puis l'on rince l'échantillon en injectant par l'alésage 31 de l'eau de rinçage tout en déplaçant le piston selon un mouvement alternatif créant une action de malaxage. L'évacuation de l'eau de rinçage s'effectue à la fois par les canaux 26 et 27 et par débordement, comme représenté sur la figure 8.

Après rinçage, on essore l'échantillon E en déplaçant vers le bas le piston 12. Immédiatement après l'essorage, il peut être nécessaire de décoller l'échantillon du piston 12 au cours de la remontée de ce dernier en envoyant un jet d'air comprimé dans l'alésage 31. Outre l'action de décollement sur l'échantillon E, ce jet d'air comprimé permet avantageusement de purger l'alésage 31 et de s'assurer qu'il ne reste plus de traces de teinture dans celui-ci avant d'effectuer l'opération suivante.

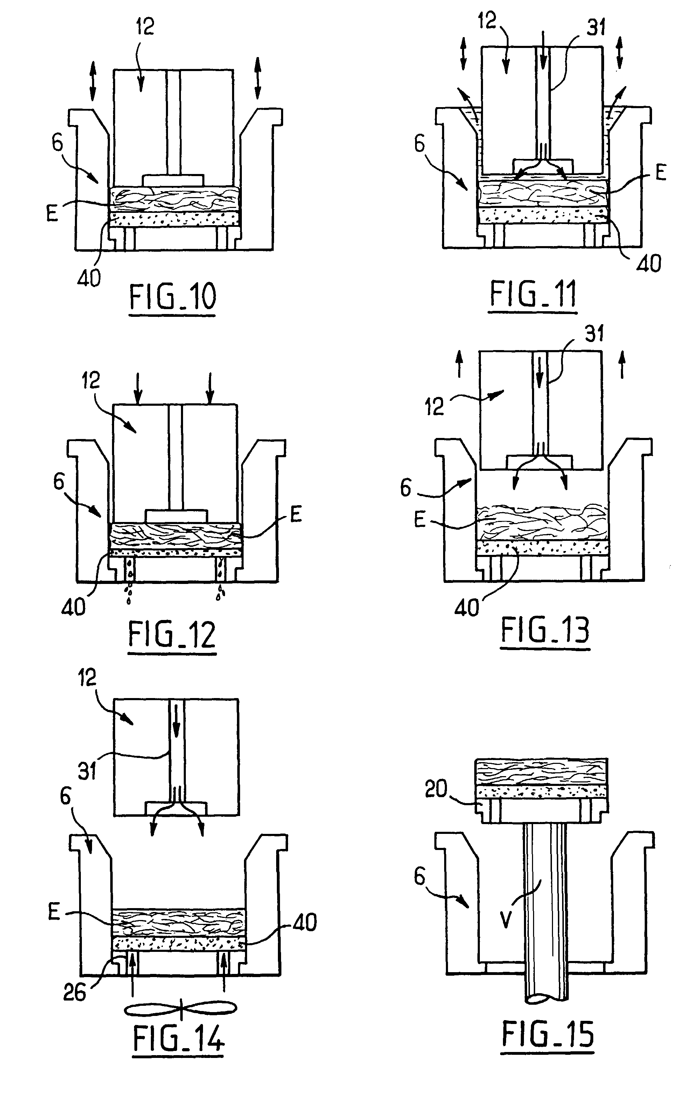

Après rinçage et essorage de l'échantillon, on peut envoyer par le l'alésage 31 une dose de shampooing, comme représenté sur la figure 9. Cette dose de shampooing est envoyée dans le godet 6 au moyen d'air comprimé, ce qui provoque avantageusement un moussage du shampooing à sa sortie du clapet 32. Après la distribution de la dose de shampooing, on déplace le piston 12 selon un mouvement alternatif provoquant une action de malaxage, comme représenté sur la figure 10. La dose de shampooing provient du même dispositif de distribution que celui qui a servi à doser la teinture.

Une fois le shampooing effectué, on rince l'échantillon en envoyant l'eau de rinçage par l'alésage 31 tout en déplaçant le piston selon un mouvement alternatif pour provoquer une action de malaxage, comme représenté sur la figure 11. Ensuite, l'échantillon peut être essoré en prolongeant vers le bas la course du piston 12, comme représenté sur la figure 12.

De préférence, des moyens de chauffage sont prévus pour maintenir les échantillons E à la température souhaitée lors de l'application de la teinture et du shampooing.

De préférence, ces moyens de chauffage sont constitués par une ou plusieurs résistances chauffantes intégrées à la platine 3.

Ainsi, la chaleur est transmise à chaque godet 6 non pas uniformément sur toute sa hauteur mais principalement par sa partie inférieure en contact avec la platine 3. On crée ainsi un gradient de température permettant de se rapprocher des conditions réelles de traitement de la chevelure. On se place donc dans des conditions expérimentales plus représentatives des conditions réelles d'application d'une teinture ou d'un shampooing que lorsque la teinture ou le shampooing sont maintenus de manière uniforme à une température constante par un bain-marie.

Pour le séchage, le piston est remonté avant d'envoyer le courant d'air de séchage comme représenté sur la figure 13. Il peut être nécessaire de décoller l'échantillon E de la face inférieure du piston 12 en envoyant un jet d'air comprimé par l'alésage 31.

Le séchage de l'échantillon s'effectue en envoyant par les canaux 26 et 27 de l'air, qui, de préférence, est chaud. Pour diminuer le temps de séchage, on soumet alternativement l'échantillon à un courant d'air chaud et à un courant d'air froid. Pour ce faire, on peut modifier la température de l'air envoyé par la soufflante mais de préférence, on envoie en permanence de l'air chaud par la soufflante avec une température sensiblement constante et l'on envoie par intermittence un jet d'air comprimé frais par l'alésage 31, comme représenté sur la figure 14.

Lorsque l'échantillon E est sec, on peut procéder à une analyse de l'échantillon traité en amenant le godet 6 au moyen d'un bras manipulateur à un poste d'analyse. La pièce 20 est avantageusement soulevée au moyen d'un vérin V pour amener l'échantillon E hors du godet 6.

Après analyse de l'échantillon, le godet peut être ramené sur la platine 3 pour subir un nouveau cycle de traitement.

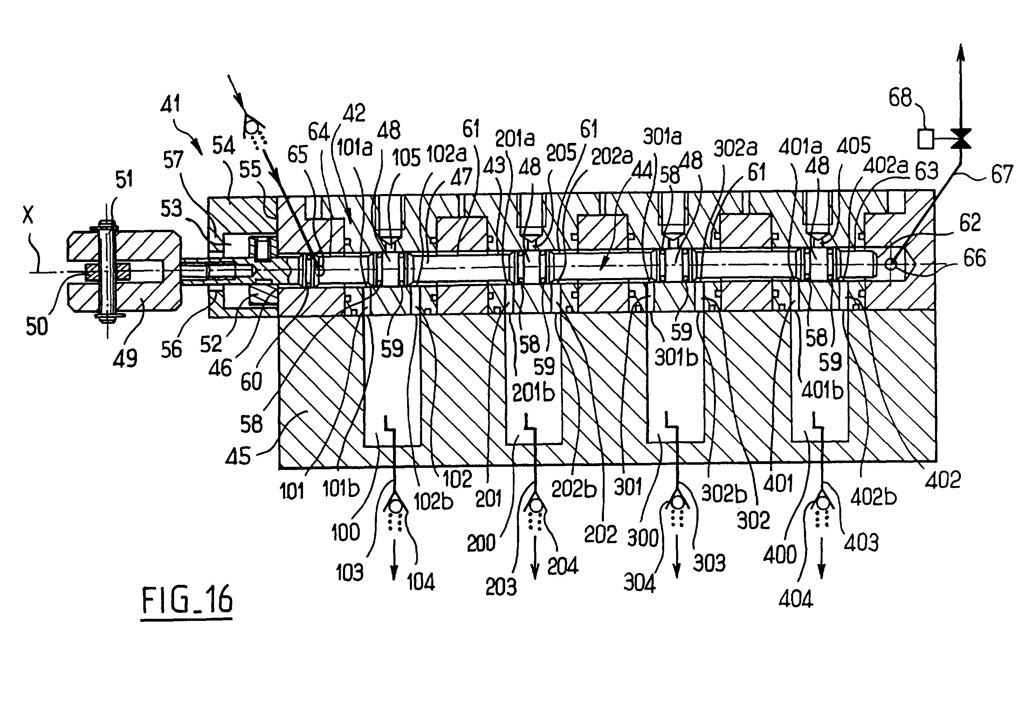

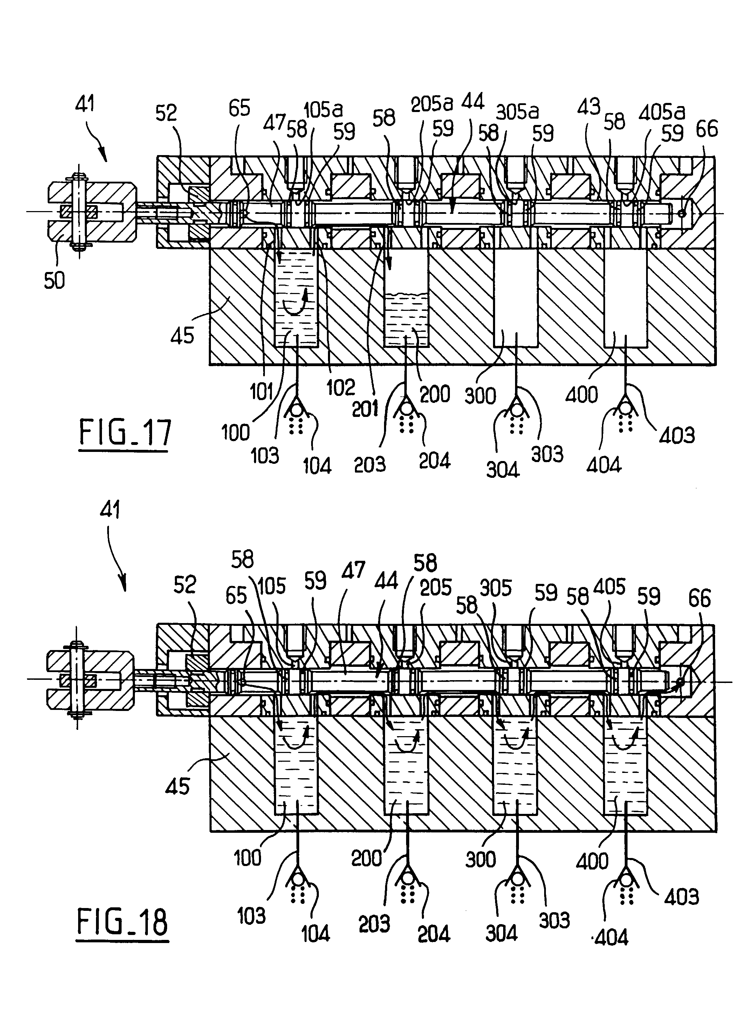

On va maintenant décrire en référence aux figures 16 à 20 une façon préférée d'amener dans chaque godet une dose d'un liquide de traitement.

De préférence, la distribution des doses de produit de traitement dans les godets s'effectue au moyen d'un dispositif 41 tel que représenté sur la figure 16.

Ce dispositif 41 comporte un corps de distributeur 42 présentant un logement 43 à l'intérieur duquel peut coulisser un organe de sélection 44, de forme allongée selon un axe longitudinal X. Le logement 43 est cylindrique de révolution autour de l'axe X.

Un bloc 45 est rapporté sous le corps de distributeur 2. Une pluralité de chambres d'accumulation de liquide sont formées dans ce bloc 45. Ces chambres sont au nombre de quatre dans l'exemple décrit, et elles sont référencées respectivement 100, 200, 300 et 400. Le volume de ces chambres correspond à la quantité de produit à envoyer dans quatre godets lorsque chaque chambre distribue son contenu dans un godet respectif ou à plus de quatre godets lorsque le contenu d'une chambre est divisé entre plusieurs godets d'un groupe de godets. On suppose dans la suite que le contenu d'une chambre est envoyé dans un godet unique associé à cette chambre.

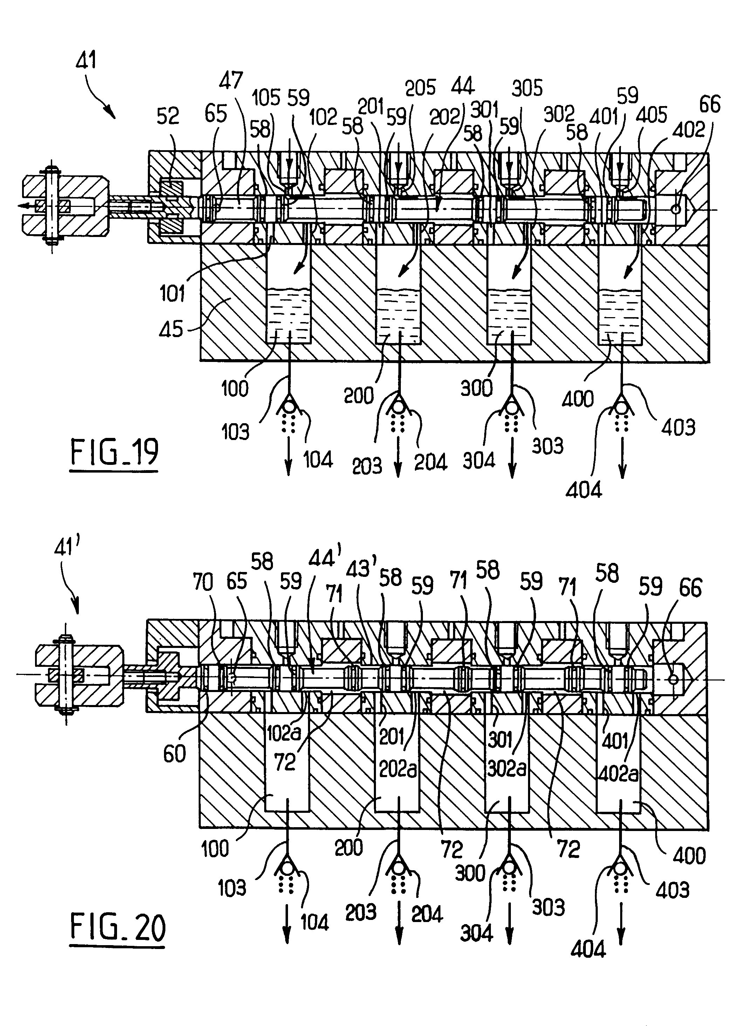

Le logement 43 est ouvert à une extrémité 46 située à gauche sur les figures et l'organe de sélection 44 sort du corps de distributeur 42 par cette extrémité. L'organe de sélection 44 comporte une tige 47 partiellement engagée dans le logement 43 et dont des portions espacées 48 de sa longueur présentent une section droite circulaire adaptée au coulissement dans le logement 43. La tige 47 est solidaire, à son extrémité située hors du logement 43, d'une fourchette 49 reliée à un bras 50 de façon articulée au moyen d'un tourillon 51. Le bras 50 peut être entraîné en rotation autour d'un axe perpendiculaire à l'axe X et parallèle au plan de coupe de la figure 16, de manière à déplacer l'organe de sélection 44 parallèlement à l'axe X, entre une position de remplissage des chambres 100,200,300 et 400 correspondant aux figures 16 à 18 et une position de distribution du contenu desdites chambres, correspondant à la figure 19.

Une bague 52 est fixée sur la tige 47 à l'extérieur du logement 43 et se déplace dans un logement 53, formé en rapportant une pièce 54 contre la face 55 du corps de distributeur 42 par laquelle sort la tige 47. Un perçage 56 est réalisé dans le fond 57 de ce logement 53 pour le passage de la portion de tige 47 reliée à la fourchette 49.

Lorsque l'organe de sélection 44 est dans ladite position de remplissage, la bague 52 vient buter contre la face 55 et lorsque l'organe de sélection 44 est dans ladite position de distribution, la bague 52 vient buter contre le fond 57 du logement 53.

Chaque chambre 100,..., 400 communique avec le logement 43 par une paire de canaux 101, 102,..., 401, 402. Ces canaux 101, 102,..., 401, 402 sont constitués par des perçages du corps de distributeur 42, d'axes perpendiculaires à l'axe X et parallèles au plan de coupe de la figure 16.

Les canaux 101, 201, 301 et 401 sont appelés canaux d'entrée et les canaux 102, 202, 302 et 402 sont appelés canaux de sortie.

On a référencé 101a, 102a,..., 401a, 402a les orifices par lesquels les canaux 101, 102,..., 401, 402 débouchent respectivement dans le logement 43 et l'on a référencé 101b, 102b,..., 401b, 402b les orifices par lesquels les canaux 101, 102,... 401, 402 débouchent dans les chambres 100,..., 400.

Chaque chambre 100,..., 400 communique avec une canalisation de distribution du liquide débouchant dans les alésages 31 des pistons 12. Dans un souci de clarté du dessin, on a représenté très schématiquement les canalisations associées auxdites chambres, référencées 103,..., 403.

Chaque canalisation 103,... 403 est munie d'un clapet s'ouvrant lorsque la pression du liquide contenu dans la chambre correspondante dépasse une valeur prédéterminée. On a référencé 104,..., 404 les clapets respectivement associés aux canalisations 103,..., 403.

Chaque clapet est avantageusement fixé sur une pièce non représentée qui permet par un règlage de sa position de modifier le volume interne de la chambre d'accumulation de liquide et donc la quantité de liquide distribuée au travers du clapet.

Des canaux sont ménagés dans le corps de distributeur 42 pour permettre d'amener dans chaque chambre 100,..., 400 de l'air comprimé pour forcer le liquide contenu dans cette chambre à sortir par la canalisation de distribution associée 103,..., 403. On a respectivement référencé 105,..., 405 les canaux d'amenée d'air comprimé. Les canaux 105,... 405 débouchent par une extrémité 105a,... 405a dans le logement 43 et à l'autre extrémité au fond d'un perçage taraudé permettant la fixation d'un embout de connexion à une canalisation raccordée à une source d'air comprimé.

On remarquera à l'examen de la figure 16 que les axes des canaux 105,... 405 sont parallèles aux axes des canaux 101, 102,... 401, 402 et pour une chambre considérée, l'axe du canal d'amenée d'air comprimé est équidistant des canaux d'entrée et de sortie associés. Ainsi, dans le cas de la chambre 100 par exemple, l'axe du canal 105 est équidistant des axes des canaux d'entrée 101 et de sortie 102. Il en est de même pour les chambres 200, 300 et 400.

Sur chaque portion 48 de la tige 47 sont formées deux gorges annulaires dans lesquelles sont logés deux joints toriques. On a référencé 58 le joint torique situé du côté de l'extrémité 46 du logement 43 et l'on a référencé 59 le joint torique situé du côté opposé. Chaque joint torique 58 ou 59 s'interpose radialement entre la tige 47 et la paroi du logement 43.

La tige 47 comporte en outre, entre la bague 52 et la portion 48 adjacente, une gorge annulaire pour recevoir un joint torique 60 s'interposant radialement entre la tige 47 et la paroi du logement 43.

La tige 47 présente, entre les portions 48, une section circulaire rétrécie de manière à ménager un interstice annulaire 61 avec la paroi du logement 43. Il en est de même entre la portion 47 située le plus à l'opposé de l'extrémité 46 du logement 43 et l'extrémité libre 62 de la tige 47 et entre la gorge annulaire formée pour recevoir le joint torique 60 et la portion 48 la plus proche de l'extrémité 46 du logement 43. On ménage ainsi des interstices annulaires respectivement référencés 63 et 64.

Des orifices 65 et 66 débouchent dans le logement 43 respectivement pour amener le liquide destiné à remplir les chambres d'accumulation 100,..., 400 et pour permettre l'évacuation du liquide lorsque toutes les chambres 100,..., 400 sont remplies. L'orifice 66 débouche au fond du logement 43 et communique avec une canalisation 67 munie, dans l'exemple de réalisation décrit, d'une vanne 68.

L'orifice 65 se situe, lorsque la tige 47 est dans la position de remplissage, c'est-à-dire lorsque la bague 52 vient en appui contre la face 55, entre le joint torique 60 et le joint torique 58 de la portion 48 de la tige 47 adjacente à l'extrémité 46 du logement 43. Le joint 60 empêche donc le liquide de quitter le logement 43 par l'extrémité 46.

Chaque couple de joints toriques 58, 59 associé à chaque portion 48 se situe, lorsque l'organe de sélection 44 est dans la position de remplissage, de part et d'autre d'un canal d'amenée d'air comprimé, de manière à l'isoler. Les joints toriques 58 et 59 se situent également entre les paires de canaux 101, 102,... 401, 402 associées aux chambres 100..., 400 de manière à forcer le passage du liquide provenant de l'orifice 65 au travers successivement des chambres 100, 200,..., 400, comme cela sera précisé dans la suite.

Lorsque l'organe de sélection 44 est déplacé vers la gauche sur la figure 16 pour être amené dans la position de distribution, correspondant à la figure 19, les couples de joints toriques 58, 59 se situent respectivement de part et d'autre des canaux d'entrée 101,..., 401 pour isoler les orifices 101a,...,401a. Par ailleurs, chaque canal 105,..., 405 d'amenée d'air comprimé débouche à droite d'un joint torique 59, de sorte que les orifices d'amenée d'air comprimé 105a,... 405a ne sont plus isolés du logement 43 dans cette position de l'organe de sélection 44.

Le fonctionnement du dispositif 41 est le suivant.

Pour remplir les chambres 100,..., 400, l'organe de sélection 44 est amené dans la position de remplissage, c'est-à-dire déplacé complètement vers la droite sur les figures 16 à 19, la bague 52 venant en butée contre la face 55. La source d'air comprimé est isolée des canaux 105,... 405 par une électrovanne à l'état fermé, non représentée sur les figures. Le liquide qui débouche par l'orifice 65 s'écoule dans l'interstice annulaire 64, puis par le canal d'entrée 101 dans la première chambre d'accumulation 100, du fait de la présence du premier joint torique 58 (à partir de la gauche sur la figure 16). Lorsque la chambre 100 est remplie, le liquide sort par trop-plein par le canal de sortie 102 et débouche dans le jeu annulaire 61 délimité axialement par le premier joint torique 59 et le deuxième joint torique 58. Le liquide rentre dans la deuxième chambre 200 par le canal d'entrée 201, et lorsque cette deuxième chambre est remplie, il s'écoule par trop-plein par le canal de sortie 202. Il gagne ensuite la troisième chambre par le jeu annulaire 61, délimité axialement par le deuxième joint torique 59 et le troisième joint torique 58. Lorsque cette chambre est remplie, le liquide s'écoule par trop-plein par le canal de sortie 302 pour gagner le jeu annulaire 61 ménagé entre le troisième joint torique 59 et le quatrième joint torique 58. Le liquide pénètre par le canal d'entrée 401 pour remplir la dernière chambre 400 et lorsque celle-ci est complètement remplie, le liquide s'écoule par le canal de sortie 402 pour gagner l'orifice 66 et être évacué par la canalisation 67, la vanne 68 étant ouverte. Les clapets 104, 204,... 404 sont restés fermés durant l'étape de remplissage, la pression du liquide étant inférieure à la pression à partir de laquelle les clapets s'ouvrent. Une fois le remplissage des chambres 100,... 400 achevé, l'organe de sélection 44 est déplacé vers la gauche sur la figure 19, la bague 52 venant en butée contre le fond 57 du logement 53. La vanne qui isolait les canaux 105,... 405 d'amenée d'air comprimé est ouverte. La vanne 68 est fermée. Les couples de joints toriques 58, 59 n'isolent plus les orifices 105a,..., 405a, mais les canaux d'entrée 101,..., 401. L'orifice 65 se trouve isolé par le joint torique 60 et le premier joint torique 58. Dans cette position de l'organe de sélection 44, les orifices 105a,... 405a communiquent respectivement avec les canaux de sortie 102,... 402. La pression de l'air comprimé est supérieure à la pression à partir de laquelle les clapets 104,... 404 s'ouvrent, de sorte que le liquide contenu dans chaque chambre est chassé au travers du clapet correspondant vers le piston associé 12.

On a représenté sur la figure 20 une variante de réalisation 41' qui diffère principalement de l'exemple de réalisation qui vient d'être décrit par la présence de joints toriques supplémentaires. On a gardé sur cette figure les mêmes références numériques pour désigner des éléments identiques ou fonctionnellement analogues, qui ne seront pas décrits à nouveau dans le détail.

L'organe de sélection, référencé 44', porte un joint torique supplémentaire 70 entre le joint torique 60 et le premier joint torique 58. Ce joint torique 70 est situé sur l'organe de sélection 44' de telle sorte que lorsque ce dernier est dans la position de remplissage correspondant à la figure 20, l'orifice 65 d'amenée de liquide débouche à l'intérieur du logement 43' entre le joint torique 70 et le premier joint torique 58, et lorsque l'organe de sélection 44' est dans la position de distribution, l'orifice 65 se trouve isolé entre les joints toriques 60 et 70.

L'organe de sélection 44' porte en outre trois joints toriques supplémentaires 71 situés chacun entre un joint torique 59 et le joint torique 58 suivant. Des évidements annulaires 72 sont formés dans le logement 43' de manière à ménager un espace entre chaque joint torique 71 et la paroi du logement 43' lorsque l'organe de sélection 44' est dans la position de remplissage. On évite ainsi que les joints 71 bloquent le passage du liquide d'une chambre vers la suivante lors du remplissage. Lorsque l'organe de sélection 44' est dans la position de remplissage, les joints toriques 71 se situent à proximité de l'extrémité droite de chacun des évidements 72, de sorte que lorsque l'organe de section 44' est déplacé vers la droite pour atteindre la position de distribution, les trois joints toriques 71 viennent s'appliquer sur la paroi du logement 43' située entre les évidements 72 et les canaux 201, 301 et 401 respectivement. La course de l'organe de sélection 44' vers la droite est choisie de sorte que les orifices 102a, 202a, 302a et 402a se trouvent isolés par chaque couple de joints toriques 58, 59 lorsque l'organe de sélection 44' est dans la position de distribution. Le passage de l'air comprimé se fait, en ce qui concerne la chambre 100, par le jeu annulaire délimité axialement par le joint torique 70 et le premier joint torique 58, et en ce qui concerne les chambres 200,... 400 par le jeu annulaire ménagé entre un joint torique 71 et le joint torique 58 immédiatement suivant, en allant de la gauche vers la droite sur la figure 20. L'orifice 66 se trouve isolé par le dernier joint torique 59 lorsque l'organe de sélection 44' est dans la position de distribution, de sorte qu'il n'est plus nécessaire de prévoir une électrovanne pour fermer la canalisation d'évacuation.

L'invention est avantageusement utilisée pour déterminer la ténacité d'une teinture capillaire, comme indiqué plus haut. Toutefois, on ne sort pas du cadre de l'invention en traitant des fibres autres que des cheveux, par exemple des fibres métalliques ou synthétiques.

## Revendications

1. Dispositif (1) pour la mise en oeuvre de traitements successifs d'échantillons, tels que des échantillons de fibres, notamment des cheveux, dont le traitement par au moins un liquide et le séchage des échantillons, caractérisé par le fait qu'il comporte une pluralité de godets (6) aptes à recevoir chacun un échantillon E, des moyens d'amenée (31) d'au moins un liquide de traitement dans chaque godet, et des moyens (17,26,27) pour créer dans chaque godet un courant gazeux de séchage.

2. Dispositif selon la revendication 1, caractérisé par le fait qu'il comporte en outre une pluralité de pistons (12) associés respectivement auxdits godets (6) et des moyens d'entraînement (5,11) pour déplacer lesdits pistons à l'intérieur desdits godets.

3. Dispositif selon la revendication 2, caractérisé par le fait qu'il comporte des moyens de commande (14) desdits moyens d'entraînement (5,11) agencés pour contrôler le déplacement desdits pistons à l'intérieur desdits godets, dans un premier mode de fonctionnement selon un mouvement alternatif sur une course prédéterminée de manière à provoquer une action de malaxage des échantillons et, dans un deuxième mode de fonctionnement, vers le bas sur une course supérieure, de manière à provoquer une action d'essorage des échantillons.

4. Dispositif selon l'une des revendications 2 et 3, caractérisé par le fait que chaque piston (12) est traversé par au moins un canal (31) d'amenée d'un liquide de traitement dans le godet correspondant.

5. Dispositif selon la revendication 4, caractérisé par le fait que chaque piston (12) est équipé d'un clapet (32) propre à empêcher la remontée du liquide de traitement dans ledit au moins un canal d'amenée (31) lorsque le piston s'enfonce dans le godet correspondant.

6. Dispositif selon la revendication 5, caractérisé par le fait que chaque piston présente un corps (30) traversé axialement par un alésage central (31) et par le fait que ledit clapet (32) est retenu à l'extrémité inférieure dudit corps en étant mobile entre une position d'obturation dudit canal et une position permettant un écoulement dudit liquide de traitement au travers d'orifices (36) dudit clapet (32).

7. Dispositif selon l'une quelconque des revendications 1 à 6, caractérisé par le fait que le fond de chaque godet (6) est percé d'orifices (26,27) et par le fait qu'il comporte des moyens pour envoyer un courant gazeux de séchage dans chaque godet au travers desdits orifices.

8. Dispositif selon la revendication 7, caractérisé par le fait qu'il comporte des moyens pour faire communiquer sélectivement lesdits orifices (26,27) soit avec une canalisation d'évacuation, soit avec une soufflante (17).

9. Dispositif selon l'une quelconque des revendications 7 et 8, caractérisé par le fait que lesdits orifices (26,27) sont agencées au fond de chaque godet (6) selon deux rangées concentriques, la section de passage des orifices (26) situés à la périphérie étant supérieure à celle des orifices (27) situés au centre.

10. Dispositif selon l'une quelconque des revendications 1 à 9, caractérisé par le fait que le fond (20) de chaque godet est amovible et peut être déplacé vers le haut à l'intérieur du godet.

11. Dispositif selon l'une quelconque des revendications précédentes, caractérisé par le fait que chaque godet présente intérieurement une rainure (23) pour le blocage en rotation de l'échantillon dans le godet.

12. Dispositif selon l'une quelconque des revendications précédentes, caractérisé par le fait qu'il comporte dans le fond de chaque godet un tampon en mousse (40) ou éponge.

13. Dispositif selon l'une quelconque des revendications précédentes, caractérisé par le fait qu'il comporte des moyens de support (3) des godets dans lesquels sont intégrées des résistances chauffantes.

14. Dispositif selon l'une quelconque des revendications précédentes, caractérisé par le fait que lesdits moyens d'amenée d'au moins un liquide de traitement dans chaque godet comportent :
- un corps de distributeur présentant un logement dans lequel débouche au moins une entrée d'amenée dudit liquide,
- une succession de chambres d'accumulation de liquide (100, 200, 300 400), communiquant par des orifices d'entrée et de sortie respectifs avec ledit logement et par des sorties de distribution de liquide respectives avec l'extérieur, lesdites sorties étant munies chacune de moyens d'obturation, pouvant être ouverts pour la distribution du liquide dans un godet correspondant,
- des canaux d'amenée d'un gaz de chasse associés respectivement auxdites chambres,
- un organe de sélection mobile dans ledit logement entre une position de remplissage et une position de distribution,
- des moyens d'étanchéité placés dans ledit logement entre le corps du distributeur et ledit organe de sélection, ces derniers étant conformés et lesdits moyens d'étanchéité étant positionnés de manière à, lorsque ledit organe de sélection est dans la position de remplissage, définir des passages de liquide dans ledit logement entre un orifice de sortie d'une chambre et un orifice d'entrée de la chambre suivante, pour forcer la circulation du liquide depuis ladite entrée d'amenée dudit liquide successivement à travers les différentes chambres, et lorsque l'organe de sélection est dans la position de distribution, fermer lesdits passages pour permettre, lorsque lesdits moyens d'obturation associés à chaque chambre sont ouverts, l'écoulement du liquide contenu à l'intérieur de chaque chambre par la sortie de distribution de liquide correspondante sous l'action dudit gaz de chasse.

15. Dispositif selon la revendication 14, caractérisé par le fait que lesdits canaux d'amenée du gaz de chasse débouchent dans ledit logement et sont isolés par lesdits moyens d'étanchéité lorsque l'organe de sélection est dans la position de remplissage.

16. Dispositif selon l'une des revendications 14 et 15, caractérisé par le fait que lesdits moyens d'étanchéité sont portés par l'organe de sélection.

17. Dispositif selon l'une quelconque des revendications 14 à 16, caractérisé par le fait que ledit organe de sélection présente une forme allongée et peut coulisser à l'intérieur dudit logement.

18. Dispositif selon l'une quelconque des revendications 14 à 17, caractérisé par le fait que chaque orifice d'amenée du gaz de chasse est situé le long de la trajectoire de l'organe de sélection entre les orifices d'entrée et de sortie d'une chambre d'accumulation débouchant dans ledit logement.

19. Dispositif selon l'une quelconque des revendications 14 à 18, caractérisé par le fait que lesdits moyens d'obturation sont constitués par des clapets (104, 204, 304, 404) s'ouvrant lorsque la pression du liquide dans la chambre d'accumulation associée dépasse une valeur prédéterminée.

20. Dispositif selon la revendication 19, caractérisé par le fait que le volume de chaque chambre d'accumulation est réglable par déplacement d'une pièce portant le clapet associé.

21. Dispositif selon l'une quelconque des revendications 15 à 20, caractérisé par le fait que ladite source de gaz de chasse est une source d'air comprimé.

22. Procédé pour appliquer des traitements successifs à des échantillons de fibres, notamment des cheveux, dont le traitement par au moins un liquide et un séchage desdits échantillons, caractérisé par le fait que pour chaque échantillon, le traitement par ledit liquide et le séchage s'effectuent dans un même godet (6) à l'intérieur duquel est placé l'échantillon.

23. Procédé selon la revendication précédente, caractérisé par le fait qu'il comporte en outre l'étape consistant à essorer chaque échantillon (E) au moyen d'un piston (12) descendu dans chaque godet (6) et venant presser l'échantillon contre le fond (20) du godet.

24. Procédé selon la revendication 22 ou 23, caractérisé par le fait qu'il comporte en outre l'étape consistant à envoyer un jet d'un gaz comprimé par un canal (31) traversant ledit piston.

25. Procédé selon l'une quelconque des revendications 22 à 24, caractérisé par le fait que chaque godet est muni d'un fond amovible (20) pouvant être remonté à l'intérieur du godet et par le fait qu'il comporte l'étape consistant à amener l'échantillon en surface, pour une analyse, en soulevant le fond du godet.

26. Procédé selon l'une quelconque des revendications 22 à 25, caractérisé par le fait qu'il comporte au moins l'étape consistant à soumettre les échantillons à une teinture capillaire.

27. Procédé selon l'une quelconque des revendications 22 à 26, caractérisé par le fait qu'il comporte les étapes consistant à :
- relier en série par des passages formés entre un corps de distributeur et un organe de sélection dans une position relative donnée par rapport au corps de distributeur une succession de chambres d'accumulation de liquide (100, 200, 300, 400), le volume de chaque chambre correspondant à une dose prédéterminée de produit à distribuer dans un godet ou groupe de godets correspondant,
- remplir lesdites chambres par circulation de liquide entre la première et la dernière chambre, le passage d'une chambre à la suivante s'effectuant par trop-plein,
- isoler les chambres entre elles en déplaçant l'organe de sélection relativement au corps de distributeur pour fermer lesdits passages,
- envoyer dans chaque chambre un gaz de chasse pour permettre le départ du liquide contenu à l'intérieur par une sortie de distribution de liquide et le remplissage du godet ou groupe de godets correspondant.

28. Utilisation d'un dispositif tel que défini dans l'une quelconque des revendications 1 à 21 pour déterminer la ténacité d'une teinture capillaire.
